# EUROPEAN PATENT SPECIFICATION

(11) **EP 1 516 698 B1**
(45) Date of publication and mention of the grant of the patent: **09.05.2007**
(21) Application number: 04255576.3
(22) Date of filing: 15.09.2004
(51) Int. Cl.: B23Q 11/08, B23Q 1/01, B23Q 17/24, B23Q 17/22

(54) **Drill press**
Bohrständer
Support de perceuse

(30) Priority: 18.09.2003 CN 03279419
(43) Date of publication of application: 23.03.2005
(73) Proprietor: Positec Power Tools (Suzhou) Co., Ltd., Suzhou 215006 (CN)
(72) Inventor: Zhendong, Gao, Suzhou 215006 (CN)
(74) Representative: Stuttard, Garry Philip

(56) References cited:
- DE-A1- 10 119 018
- US-A- 3 787 138
- US-A- 5 741 096

## Description

The present invention relates to a drill press, in particular to a drill press having a protective guard.

Chinese Patent number 02219682 discloses a drill press having a laser alignment device. The drill press includes a base, a case body, a vertical pole and a worktable. The laser alignment device positioned in the case body includes a laser guard and an adjustable laser lamp downwardly positioned within the laser guard. Because the laser alignment device is located in the case body, it is difficult to furnish existing drill presses with such a laser alignment device. Moreover, the laser alignment device located in this manner is inconvenient to maintain and difficult to replace.

US-A-3787138 discloses a drill press with a transparent protective guard which ensleeves the rotary drill bit. DE10119018A discloses a drill press with a laser alignment device mounted on the drill housing.

The present invention seeks to overcome certain disadvantages of the prior art by providing a drill press having a discrete protective guard which has a laser alignment device and a power supply device therefor. It is convenient to maintain the protective guard and to replace the laser alignment device and the power supply device.

Thus viewed from one aspect the present invention provides a drill press for cutting a workpiece comprising:
a base;
an upper case body;
a main rotary shaft member extending downwardly from the upper case body and including:
   a bushing slidably connected to the upper case body and
   a central rotary shaft disposed within and rotatable with respect to the
   bushing, said central rotary shaft terminating in a rotary cutting tool,
a connecting member connecting the base with the upper case body in spaced apart relationship,
a protective guard adapted to intercept debris ejected from the workpiece towards the operator during operation of the rotary cutting tool, wherein the protective guard includes:
   a fixed base mounted on the bushing,
   a laser alignment device arranged on the fixed base and
   at least a part of a power supply device for the laser alignment device arranged on the fixed base.

By furnishing the protective guard as a separate accessory (ie externally to the case body) with the laser alignment device and a power supply device therefor, existing drill presses with no laser alignment device can be conveniently fitted with a laser alignment device. Furthermore, it is convenient to maintain and replace the laser alignment device and its power supply.

Preferably the fixed base defines a through hole and the bushing is fitted through the through hole.

Preferably the fixed base comprises:
a first jaw and a second jaw, wherein the through hole is defined between opposing surfaces of the first jaw and the second jaw and the leading edge of each of the first jaw and second jaw together define a mouth. Preferably the mouth is selectively lockable.

Preferably the fixed base has a substantially horseshoe configuration defining a through-hole which receives the bushing.

Preferably the drill press further comprises:
a locking member for locking the protective guard to the bushing.

Preferably the protective guard further comprises:
a substantially transparent guard with a reentrant configuration mounted on the underside of the fixed base.

Preferably the substantially transparent guard has a substantially U-shaped configuration and is mounted around at least a part of the circumference of the underside of the fixed base.

Preferably the protective guard comprises:
a fixed inner substantially transparent guard with a reentrant configuration mounted on the underside of the fixed base and nested in an outer substantially transparent sleeve. Particularly preferably the outer substantially transparent sleeve is delimitedly slidable on the fixed inner substantially transparent guard.

Preferably the fixed inner substantially transparent guard has a substantially U-shaped configuration and is mounted around at least a part of the circumference of the underside of the fixed base and the outer substantially transparent sleeve has a substantially U-shaped configuration. Preferably the fixed inner substantially transparent guard is coupled to the underside of the fixed base by a linking wall. Particularly preferably the linking wall forms a substantially U-shaped retaining channel in which the edge of the inner substantially transparent guard is retained.

In a preferred embodiment the fixed inner substantially transparent guard defines a first sliding slot and the outer substantially transparent sleeve defines a second sliding slot aligned with the first sliding slot and the protective guard further comprises:
an adjustable delimiting pin extending through the first sliding slot and the second sliding slot capable of securing the outer substantially transparent sleeve to the fixed inner substantially transparent guard.

Preferably the drill press further comprises:
a substantially horizontal worktable for supporting a workpiece mounted beneath the case body substantially perpendicularly on the vertical connecting member.

Preferably the laser alignment device includes a first laser generator and a second laser generator fixed to the fixed base and a first adjusting device and a second adjusting device for the first laser generator and the second laser generator respectively, whereby two fan beams generated by the first laser generator and the second laser generator project onto the worktable to form two lines whose point of intersection overlap a projection of an axes of the main rotary shaft member on the worktable.

Preferably each of the first and second adjusting device includes a worm wheel fixed to the laser generator and a worm engaged with the worm wheel.

Preferably the locking member includes:
a bolt hole which engages a locking bolt for locking the fixed base to the bushing.

Preferably the power supply device includes a rotor fastened to the central rotary shaft and a stator reel located around the rotor and the stator reel is mounted in the fixed base and electrically connected to the laser generators.

Preferably the power supply device includes at least one battery electrically connected to the laser generators and mounted in the fixed base.

The present invention will now be described in a non-limitative sense with reference to the accompanying Figures in which:
Figure 1 is a side view of a first embodiment of the drill press of the present invention;
Figure 2 is an exploded perspective view of the protective guard and main rotary shaft member of the first embodiment of the drill press of the present invention;
Figure 3 is a cross-sectional view of the main rotary shaft member of the first embodiment of the drill press of the present invention as seen in Figure 2;
Figure 4 is an assembled perspective view of the first embodiment of the drill press of the present invention as seen in Figure 2;
Figure 5 is a perspective view of the protective guard of the first embodiment of the drill press of the present invention positioned upside down;
Figure 6 is a view of fan beams which are generated from a laser generator in the protective guard and which are projected on the worktable of the first embodiment of the drill press of the present invention;
Figure 7 is a view of the adjusting device of the protective guard of the first embodiment of the drill press of the present invention;
Figure 8 is a view of a stator reel and a rotor of the power supply device of the protective guard of the first embodiment of the drill press of the present invention;
Figure 9 is a circuit diagram of the stator reel of Figure 8 and the laser generators; and
Figure 10 is an assembled perspective view of the protective guard of a second embodiment of the drill press of the present invention positioned upside down.

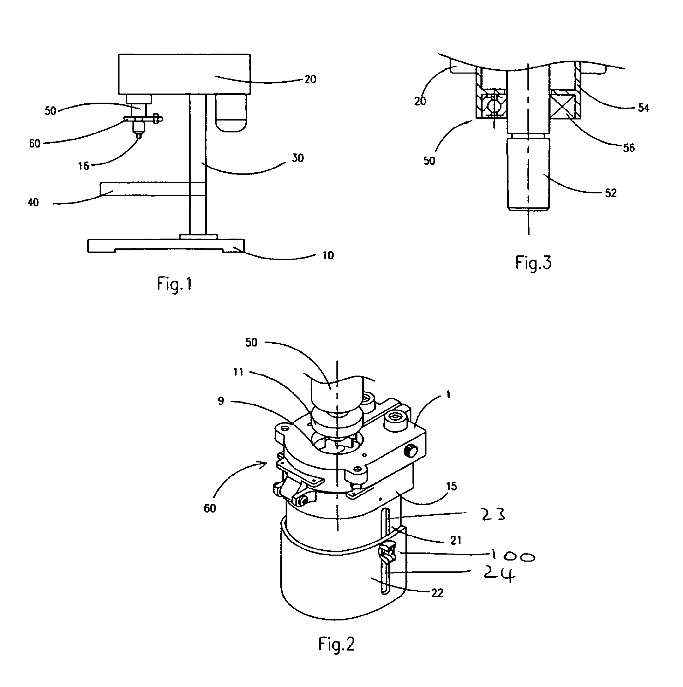

Referring in particular to Figure 1, a drill press according to a first embodiment of the present invention includes a base 10 spaced apart from an upper case body 20 by a substantially vertical pole 30 connected therebetween. A substantially horizontal worktable 40 for supporting a workpiece is mounted beneath the case body 20 substantially perpendicularly on the vertical pole 30. A main rotary shaft member 50 is attached to the case body 20 and projects downwardly towards the worktable 40 terminating in a rotary cutting tool 16. Referring in particular to Figure 3, the main rotary shaft member 50 has a central rotary shaft 52, a bushing 54 and a bearing 56 therebetween. The bushing 54 is slidably mounted on the upper case body 20.

Referring in particular to Figures 2 to 4, a protective guard 60 is mounted on the bushing 54. The protective guard 60 includes a fixed base 1 which has a largely planar, substantially horseshoe configuration defining a through hole 9 which receives the bushing 54. A substantially transparent guard 2 which has a substantially U-shaped configuration is mounted around a part of the circumference of the underside of the fixed base 1. The substantially transparent guard 2 is adapted to intercept debris (*eg* chips) ejected from the workpiece in the direction of the operator during operation of the rotary cutting tool 16. The substantially transparent guard 2 includes an outer substantially transparent sleeve 22 slidable on a fixed inner substantially transparent guard 21 which is coupled to the underside of the fixed base 1 by a linking wall 15. The linking wall 15 forms a substantially U-shaped retaining channel in which the edge of the inner substantially transparent guard 21 is retained.

The protective guard 60 further includes a bolt hole 14 which engages a locking bolt 13 for locking the protective guard 60 to the bushing 54.

The inner substantially transparent guard 21 and the outer substantially transparent sleeve 22 respectively define a first sliding slot 23 and a second sliding slot 24 aligned with the first sliding slot 23. An adjustable delimiting pin 100 extends through the first sliding slot 23 and the second sliding slot 24 and secures the outer substantially transparent sleeve 22 to the fixed inner substantially transparent guard 21 when the desired relative position of the two has been achieved. For a lengthy tool 16, the delimiting pin 100 may be released to slide the outer substantially transparent sleeve 22 along the inner substantially transparent guard 21 to the desired position where it is secured with the delimiting pin 100 to effectively protect the operator.

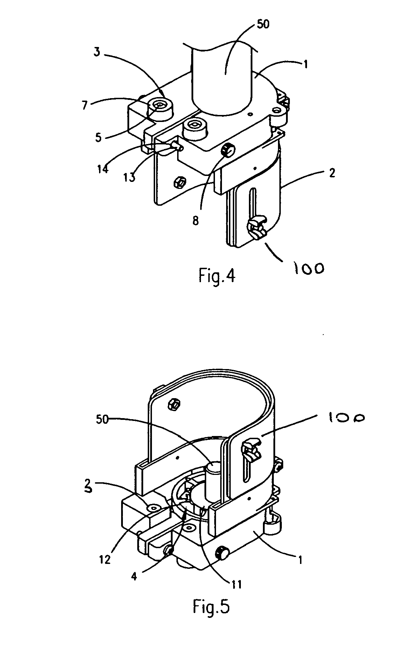

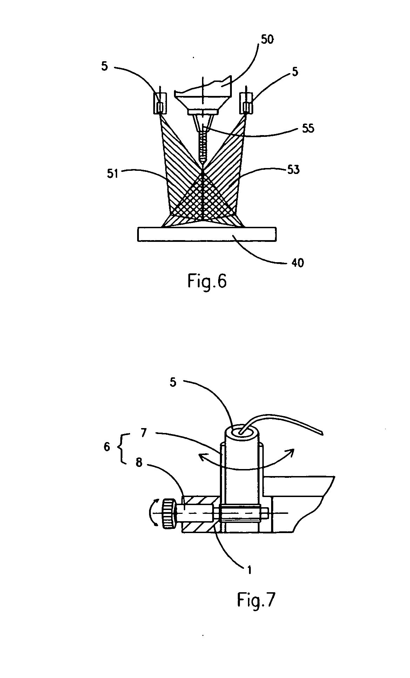

A laser alignment device 3 is arranged on the fixed base 1 together with at least a part of its power supply device 4. Referring in particular to Figures 4 to 7, the laser alignment device 3 includes two laser generators 5 extending through and fixed to the fixed base 1 and two adjusting devices 6 respectively connected to the two laser generators 5. Each adjusting device 6 is located at one side of the fixed base 1 and includes a worm 8 engaged with a worm wheel 7. The worm wheel 7 is fixed and encapsulates the laser generator 5. The worm wheel 7 is perpendicular to and engages the worm 8 so as to adjust the laser generator 5 thereby projecting the fan beams 51, 52 generated by the two laser generators 5 onto the worktable 40 to form two lines. The point of intersection of the two lines overlaps a projection of an axis 55 of the main rotary shaft member 50 onto the worktable 40.

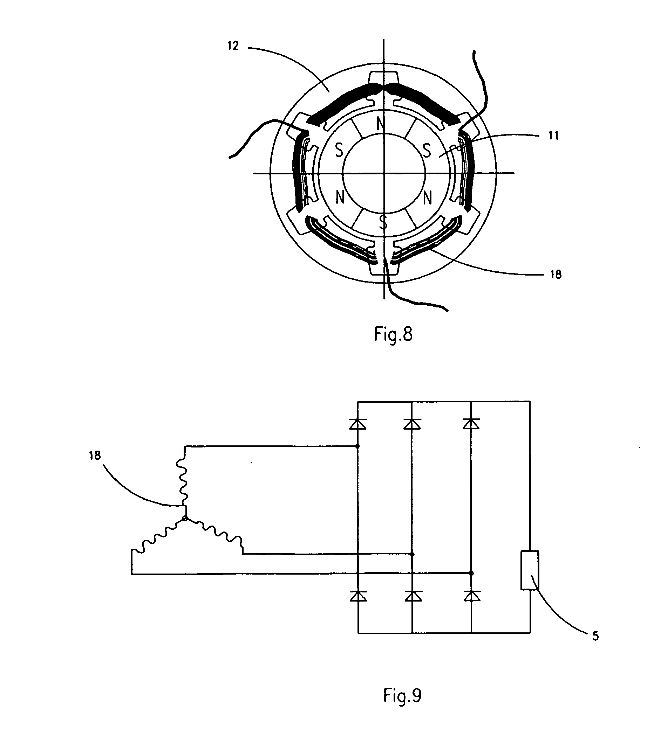

Referring in particular to Figure 8, the power supply device 4 according to the first embodiment of the present invention includes a rotor 11 tightly enclosing the central rotary shaft 52 and a stator reel 12 located around the rotor 11. The stator reel 12 is mounted in the fixed base 1 and is electrically connected to the laser generators 5.

A circuit board (not shown) is electrically connected between the stator reel 12 and the laser generators 5 and the relevant circuit diagram is shown in Figure 9. When the drill press is operational, the rotation of the central rotary shaft 52 rotatably drives the rotor 11 with respect to the stator reel 12 to produce current. The current is transmitted to the laser generators 5 via the circuit board.

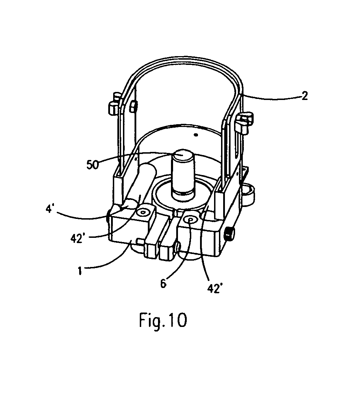

Referring in particular to Figure 10, a power supply device 4' according to a second embodiment of the present invention includes two batteries 42', The two batteries 42' are attached to the fixed base 1 and electrically connected with the laser generators 5 for supplying electrical power to the laser generators 5.

## Claims

1. A drill press for cutting a workpiece comprising:
a base (10);
an upper case body (20);
a main rotary shaft member (50) extending downwardly from the upper case body (20) and including:
a bushing (54) slidably connected to the upper case body (20) and
a central rotary shaft (52) disposed within and rotatable with respect to the bushing (54), said central rotary shaft (52) terminating in a rotary cutting tool (16),
a connecting member connecting the base with the upper case body in spaced apart relationship;
a protective guard (60) adapted to intercept debris ejected from the workpiece towards the operator during operation of the rotary cutting tool (16), wherein the protective guard (60) includes:
a fixed base (1) mounted on the bushing (54),
a laser alignment device (3) arranged on the fixed base (1) and
at least a part of a power supply device (4) for the laser alignment device (3) arranged on the fixed base (1).

2. A drill press as claimed in claim 1 wherein the fixed base (1) defines a through hole (9) and the bushing (54) is fitted through the through hole (9).

3. A drill press as claimed in claim 1 or 2 further comprising:
a locking member for locking the protective guard (60) to the bushing (54).

4. A drill press as claimed in claim 1, 2 or 3 wherein the fixed base comprises:
a first jaw and a second jaw, wherein the through hole is defined between opposing surfaces of the first jaw and the second jaw, and a leading edge of each of the first jaw and second jaw together define a mouth.

5. A drill press as claimed in claim 4 wherein the mouth is selectively lockable.

6. A drill press as claimed in any preceding claim wherein the fixed base (1) has a substantially horseshoe configuration defining a through-hole (9) which receives the bushing (54).

7. A drill press as claimed in any preceding claim wherein the protective guard (60) further comprises:
a substantially transparent guard (2) with a reentrant configuration mounted on the underside of the fixed base (1).

8. A drill press as claimed in claim 7 wherein the substantially transparent guard (2) has a substantially U-shaped configuration and is mounted around at least a part of the circumference of the underside of the fixed base (1).

9. A drill press as claimed in any preceding claim wherein the protective guard (60) comprises:
a fixed inner substantially transparent guard (21) with a reentrant configuration mounted on the underside of the fixed base (1) and nested at least partially in an outer substantially transparent sleeve (22).

10. A drill press as claimed in claim 9 wherein the outer substantially transparent sleeve (22) is delimitedly slidable on the fixed inner substantially transparent guard (21).

11. A drill press as claimed in claim 9 or 10 wherein the fixed inner substantially transparent guard (21) has a substantially U-shaped configuration and is mounted around at least a part of the circumference of the underside of the fixed base (1) and wherein the outer substantially transparent sleeve (22) has a substantially U-shaped configuration.

12. A drill press as claimed in any of claims 9 to 11 wherein the fixed inner substantially transparent guard (21) is coupled to the underside of the fixed base (1) by a linking wall (15).

13. A drill press as claimed in claim 12 wherein the linking wall (15) forms a substantially U-shaped retaining channel in which the edge of the inner substantially transparent guard (21) is retained.

14. A drill press as claimed in any of claims 9 to 13 wherein the fixed inner substantially transparent guard (21) defines a first sliding slot (23) and the outer substantially transparent sleeve (22) defines a second sliding slot (24) aligned with the first sliding slot (23) and the protective guard (60) further comprises:
an adjustable delimiting pin (100) extending through the first sliding slot (23) and the second sliding slot (24) capable of securing the outer substantially transparent sleeve (22) to the fixed inner substantially transparent guard (21).

15. A drill press as claimed in any preceding claim further comprising:
a substantially horizontal worktable (40) for supporting a workpiece mounted beneath the case body (20) substantially perpendicularly on the vertical pole (30).

16. A drill press as claimed in claim 15 wherein the laser alignment device (3) includes a first and second laser generator (5) fixed to the fixed base (1) and a first and second adjusting device (8) for each laser generator (5) respectively, whereby two fan beams (51, 52) generated by the first and second laser generators (5) project onto the worktable (40) to form two lines whose point of intersection overlaps a projection of an axes (55) of the main rotary shaft member (50) on the worktable (40).

17. A drill press as claimed in claim 16 wherein each of the first and second adjusting device (6) includes a worm wheel (7) fixed to the laser generator (5) and a worm (8) engaged with the worm wheel (7).

18. A drill press as claimed in claim 3 wherein the locking member includes:
a bolt hole (14) which engages a locking bolt (13) for locking the fixed base (1) to the bushing (54).

19. A drill press as claimed in any preceding claim wherein the power supply device includes a rotor (11) fastened to the central rotary shaft (52) and a stator reel (12) located around the rotor (11), and the stator reel (12) is mounted in the fixed base (1) and electrically connected to the laser generators (5).

20. A drill press as claimed in any of claims 1 to 18 wherein the power supply device includes at least one battery (42') electrically connected to the laser generators (5) and mounted in the fixed base (1).

## Patentansprüche

1. Bohrständer zum Schneiden eines Werkstücks, umfassend:
eine Basis (10);
einen oberen Gehäusekörper (20);
ein Hauptdrehwellenteil (50), welches sich von dem oberen Gehäusekörper (20) nach unten erstreckt und umfasst:
eine Durchführung (54), welche gleitend mit dem oberen Gehäusekörpers (20) verbunden ist, und
eine Mitteldrehwelle (52), welche in der Durchführung (54) angeordnet ist und bezüglich dieser drehbar ist, wobei die Mitteldrehwelle (52) in einem Drehschneidwerkzeug (16) endet,
ein Verbindungsteil, welches die Basis mit dem oberen Gehäusekörper in einer beabstandeten Beziehung verbindet;
einen Schutz (60), welcher derart ausgestaltet ist, dass er einen Fremdkörper, welcher von dem Werkstück während eines Betriebes des Drehschneidwerkzeugs (16) zu der Bedienpersonen geschleudert wird, abfängt, wobei der Schutz (60) umfasst:
eine befestigte Basis (1), welche an der Durchführung (54) angebracht ist,
eine Laserausrichtungsvorrichtung (3), welche auf der befestigten Basis (1) angeordnet ist, und
mindestens einen Teil einer Stromzufuhrvorrichtung (4) für die Laserausrichtungsvorrichtung (3), welche auf der befestigten Basis (1) angeordnet ist.

2. Bohrständer nach Anspruch 1, wobei die befestigte Basis (1) ein Durchgangsloch (9) definiert und die Durchführung (54) durch das Durchgangsloch (9) eingepasst ist.

3. Bohrständer nach Anspruch 1 oder 2, weiter umfassend:
ein Verriegelungsteil, um den Schutz (60) an der Durchführung (54) zu arretieren.

4. Bohrständer nach Anspruch 1, 2 oder 3, wobei die befestigte Basis umfasst:
eine erste Backe und eine zweite Backe, wobei das Durchgangsloch zwischen gegenüberliegenden Oberflächen der ersten Backe und der zweiten Backe definiert ist, und wobei eine führende Kante jeweils von der ersten Backe und der zweiten Backe zusammen eine Öffnung definieren.

5. Bohrständer nach Anspruch 4, wobei die Öffnung selektiv verriegelbar ist.

6. Bohrständer nach einem der vorhergehenden Ansprüche, wobei die befestigte Basis (1) eine im Wesentlichen hufeisenförmige Konfiguration aufweist, welche ein Durchgangsloch (9) definiert, welches die Durchführung (54) aufnimmt.

7. Bohrständer nach einem der vorhergehenden Ansprüche, wobei der Schutz (60) weiter umfasst:
einen im Wesentlichen durchsichtigen Schutz (2) mit einer geschlossenen Konfiguration, welcher auf die Unterseite der befestigten Basis (1) montiert ist.

8. Bohrständer nach Anspruch 7, wobei der im Wesentlichen durchsichtige Schutz (2) eine im Wesentlichen U-förmigen Konfiguration aufweist und um zumindest einen Teil des Umfangs der Unterseite der befestigten Basis (1) herum montiert ist.

9. Bohrständer nach einem der vorhergehenden Ansprüche, wobei der Schutz (60) umfasst: einen befestigten inneren im Wesentlichen durchsichtigen Schutz (21) mit einer geschlossenen Konfiguration, welcher auf der Unterseite der befestigten Basis (1) montiert und zumindest teilweise in eine äußere im Wesentlichen durchsichtige Abdeckung (22) gesteckt ist.

10. Bohrständer nach Anspruch 9, wobei die äußere im Wesentlichen durchsichtige Abdeckung (22) begrenzt gleitbar auf dem befestigten inneren im Wesentlichen durchsichtigen Schutz (21) angeordnet ist.

11. Bohrständer nach Anspruch 9 oder 10, wobei der befestigte innere im Wesentlichen durchsichtige Schutz (21) eine im Wesentlichen U-förmige Konfiguration aufweist und zumindest um einen Teil des Umfangs der Unterseite der befestigten Basis (1) herum montiert ist und wobei die äußere im Wesentlichen durchsichtige Abdeckung (22) eine im Wesentlichen U-förmige Konfiguration aufweist.

12. Bohrständer nach einem der Ansprüche 9 bis 11, wobei der befestigte innere im Wesentlichen durchsichtige Schutz (21) mit der Unterseite der befestigten Basis (1) durch eine Verbindungswand (15) gekoppelt ist.

13. Bohrständer nach Anspruch 12, wobei die Verbindungswand (15) einen im Wesentlichen U-förmigen Haltekanal ausbildet, in welchem der Rand des inneren im Wesentlichen durchsichtigen Schutzes (21) gehalten wird.

14. Bohrständer nach einem der Ansprüche 9 bis 13, wobei der befestigte innere im Wesentlichen durchsichtige Schutz (21) einen ersten Gleitschlitz (23) und die äußere im Wesentlichen durchsichtige Abdeckung (22) einen zweiten Gleitschlitz (24) definiert, welcher mit dem ersten Gleitschlitz (23) ausgerichtet ist, und wobei der Schutz (60) weiter umfasst:
einen einstellbaren Begrenzungsstift (100), welcher sich durch den ersten Gleitschlitz (23) und den zweiten Gleitschlitz (24) erstreckt, und in der Lage ist, die äußere im Wesentlichen durchsichtige Abdeckung (22) an dem befestigten inneren im Wesentlichen durchsichtigen Schutz (21) zu befestigen.

15. Bohrständer nach einem der vorhergehenden Ansprüche, weiter umfassend:
einen im Wesentlichen horizontalen Arbeitstisch (40) zum Halten eines Werkstücks, welcher unterhalb des Gehäusekörpers (20) im Wesentlichen senkrecht an der vertikalen Stange (30) montiert ist.

16. Bohrständer nach Anspruch 15, wobei die Laserausrichtungsvorrichtung (3) einen ersten und einen zweiten Lasergenerator (5), welche an der befestigten Basis (1) befestigt sind, und eine erste und eine zweite Einstellungsvorrichtung (8) für jeweils jeden Lasergenerator (5) umfasst, wobei zwei Fächerstrahlen (51, 52), welche durch den ersten und den zweiten Lasergenerator (5) erzeugt werden, auf den Arbeitstisch (40) projiziert werden, um zwei Linien auszubilden, deren Schnittpunkt sich mit einer Projektion einer Achse (55) des Hauptdrehwellenteiles (50) auf dem Arbeitstisch (40) überschneidet.

17. Bohrständer nach Anspruch 16, wobei die erste und die zweite Einstellungsvorrichtung (6) jeweils ein Schneckenrad (7), welches an dem Lasergenerator (5) befestigt ist, und eine Schnecke (8) welche sich mit dem Schneckenrad (7) in Eingriff befindet, umfassen.

18. Bohrständer nach Anspruch 3, wobei das Verriegelungsteil umfasst:
ein Bolzenloch (14), welches mit einem Verriegelungsbolzen (13) in Eingriff kommt, um die befestigte Basis (1) an der Durchführung (54) zu arretieren.

19. Bohrständer nach einem der vorhergehenden Ansprüche, wobei die Stromzufuhrvorrichtung einen Rotor (11), welcher an der Mitteldrehwelle (52) befestigt ist, und einen Statorring (12), welcher um den Rotor (11) herum angeordnet ist, umfasst, und wobei der Statorring (12) in der befestigten Basis (1) montiert und elektrisch mit den Lasergeneratoren (5) verbunden ist.

20. Bohrständer nach einem der Ansprüche 1 bis 18, wobei die Stromzufuhrvorrichtung zumindest eine Batterie (42') umfasst, welche elektrisch mit den Lasergeneratoren (5) verbunden und in der befestigten Basis (1) montiert ist.

## Revendications

1. Perceuse à colonne destinée à découper une pièce de fabrication, comprenant :
une base (10),
un corps de boîtier supérieur (20),
un élément principal d'arbre tournant (50) s'étendant vers le bas depuis le corps de boîtier supérieur (20) et incluant :
une douille (54) reliée avec possibilité de coulissement sur le corps de boîtier supérieur (20) et
un arbre central tournant (52) disposé à l'intérieur de la douille (54) et pouvant tourner par rapport à celle-ci, ledit arbre central tournant (52) se terminant en un outil de découpe tournant (16),
un élément de liaison reliant la base au corps de boîtier supérieur en une relation à distance,
un capot protecteur (60) conçu pour intercepter des fragments d'usure éjectés de la pièce de fabrication vers l'opérateur pendant le fonctionnement de l'outil de découpe tournant (16), dans laquelle le capot protecteur (60) inclut :
une base fixe (1) montée sur la douille (54),
un dispositif d'alignement à laser (3) disposé sur la base fixe (1) et
au moins une partie d'un dispositif d'alimentation (4) destinée au dispositif d'alignement à laser (3) disposé sur la base fixe (1).

2. Perceuse à colonne selon la revendication 1, dans laquelle la base fixe (1) définit un trou traversant (9) et la douille (54) est assujettie au travers du trou traversant (9).

3. Perceuse à colonne selon la revendication 1 ou 2 comprenant en outre :
un élément de verrouillage destiné à verrouiller le capot de protection (60) sur la douille (54).

4. Perceuse à colonne selon la revendication 1, 2 ou 3, dans laquelle la base fixe comprend :
une première mâchoire et une seconde mâchoire, dans laquelle le trou traversant est défini entre des surfaces s'opposant de la première mâchoire et de la seconde mâchoire et dans laquelle des bords avant de chacune de la première mâchoire et de la seconde mâchoire définissent ensemble une bouche.

5. Perceuse à colonne selon la revendication 4, dans laquelle la bouche est verrouillable sélectivement.

6. Perceuse à colonne selon l'une quelconque des revendications précédentes, dans laquelle la base fixe (1) présente sensiblement une configuration de fer à cheval définissant un trou traversant (9) qui reçoit la douille (54).

7. Perceuse à colonne selon l'une quelconque des revendications précédentes, dans laquelle le capot protecteur (60) comprend en outre :
un capot sensiblement transparent (2) présentant une configuration rentrante montée sur le côté inférieur de la base fixe (1).

8. Perceuse à colonne selon la revendication 7, dans laquelle le capot sensiblement transparent (2) présente une configuration sensiblement en forme de U et est monté autour d'au moins une partie de la circonférence du côté inférieur de la base fixe (1).

9. Perceuse à colonne selon l'une quelconque des revendications précédentes, dans laquelle le capot protecteur (60) comprend :
un capot intérieur fixe sensiblement transparent (21) présentant une configuration rentrante montée sur le côté inférieur de la base fixe (1) et emboîtée au moins partiellement dans un manchon extérieur sensiblement transparent (22).

10. Perceuse à colonne selon la revendication 9, dans laquelle le manchon extérieur sensiblement transparent (22) peut coulisser de manière délimitée sur le capot intérieur fixe sensiblement transparent (21).

11. Perceuse à colonne selon la revendication 9 ou 10, dans laquelle le capot intérieur sensiblement transparent (21) présente une configuration sensiblement en forme de U et est monté autour d'au moins une partie de la circonférence du côté inférieur de la base fixe (1) et dans laquelle le manchon extérieur sensiblement transparent (22) présente une configuration sensiblement en forme de U.

12. Perceuse à colonne selon l'une quelconque des revendications 9 à 11, dans laquelle le capot intérieur fixe sensiblement transparent (21) est accouplé au côté inférieur de la base fixe (1) grâce à une paroi de liaison (15).

13. Perceuse à colonne selon la revendication 12, dans laquelle la paroi de liaison (15) forme un canal de retenue sensiblement en forme de U dans lequel le bord du capot intérieur sensiblement transparent (21) est maintenu.

14. Perceuse à colonne selon l'une quelconque des revendications 9 à 13, dans laquelle le capot fixe intérieur sensiblement transparent (21) définit une première gorge coulissante (23) et le manchon extérieur sensiblement transparent (22) définit une seconde gorge coulissante (24) alignée avec la première gorge coulissante (23) et dans laquelle le capot de protection (60) comprend en outre :
une broche réglable de délimitation (100) s'étendant au travers de la première gorge coulissante (23) et de la seconde gorge coulissante (24), pouvant immobiliser le manchon extérieur sensiblement transparent (22) sur le capot fixe intérieur sensiblement transparent (21).

15. Perceuse à colonne selon l'une quelconque des revendications précédentes, comprenant en outre :
une table de travail sensiblement horizontale (40) destinée à supporter une pièce de fabrication montée sous le corps de boîtier (20) de manière pratiquement perpendiculaire sur le pôle vertical (30).

16. Perceuse à colonne selon la revendication 15, dans laquelle le dispositif d'alignement à laser (3) inclut des premier et second générateurs laser (5) fixés à la base fixe (1) et des premier et second dispositifs de réglage (8) destinés respectivement à chaque générateur laser (5), deux faisceaux en éventail (51, 52) générés par les premier et second générateurs laser (5) se projetant sur la table de travail (40) afin de former deux droites dont le point d'intersection chevauche une projection d'un axe (55) de l'élément principal d'arbre tournant (50) sur la table de travail (40).

17. Perceuse à colonne selon la revendication 16, dans laquelle chacun des premier et second dispositifs de réglage (6) inclut une roue à vis sans fin (7) fixée au générateur laser (5) et une vis sans fin (8) en prise avec la roue à vis sans fin (7).

18. Perceuse à colonne selon la revendication 3, dans laquelle l'élément de verrouillage inclut :
un trou de boulon (14) qui coopère avec un boulon de verrouillage (13) afin de verrouiller la base fixe (1) sur la douille (54).

19. Perceuse à colonne selon l'une quelconque des revendications précédentes, dans laquelle le dispositif d'alimentation inclut un rotor (11) fixé sur l'arbre central tournant (52) et une bobine de stator (12) située autour du rotor (11), et dans laquelle la bobine de stator (12) est montée dans la base fixe (1) et est reliée électriquement aux générateurs laser (5).

20. Perceuse à colonne selon l'une quelconque des revendications 1 à 18, dans laquelle le dispositif d'alimentation inclut au moins une batterie (42') reliée électriquement aux générateurs laser (5) et montée dans la base fixe (1).
